# EUROPEAN PATENT APPLICATION

(11) **EP 4 692 700 A1**
(43) Date of publication of application: **11.02.2026**
(21) Application number: 24788686.4
(22) Date of filing: 08.04.2024
(51) Int. Cl.: F25D 29/00, F25D 11/00

(54) **ELECTRIC TRANSPORT REFRIGERATING MACHINE CONTROL SYSTEM, ELECTRIC TRANSPORT REFRIGERATING MACHINE EQUIPPED WITH SAME, CONTROL METHOD FOR ELECTRIC TRANSPORT REFRIGERATING MACHINE CONTROL SYSTEM, AND CONTROL PROGRAM FOR ELECTRIC TRANSPORT REFRIGERATING MACHINE CONTROL SYSTEM**

(30) Priority: 10.04.2023 JP 2023063524
(71) Applicant: MITSUBISHI HEAVY INDUSTRIES THERMAL SYSTEMS, LTD., Tokyo 100-8332 (JP)
(72) Inventor: JINNO, Hiroki, Tokyo 100-8332 (JP); OHATA, Yohei, Tokyo 100-8332 (JP); KOMORIYA, Taiki, Tokyo 100-8332 (JP); ISAKA, Kazuyuki, Tokyo 100-8332 (JP); TOYAMA, Koji, Tokyo 100-8332 (JP)
(74) Representative: Cabinet Beau de Loménie
(86) International application number: PCT/JP2024/014214
(87) International publication number: WO 2024/214662

(57) **Abstract**

Provided is an electric transport refrigerating machine control system that makes it possible to expand a range of selectable external power sources for driving an electric transport refrigerating machine that is mounted on a transport refrigerating vehicle, thus increasing versatility of the electric transport refrigerating machine. This electric transport refrigerating machine control system is applied to an electric transport refrigerating machine including an inverter, a converter, and an electric compressor. The electric transport refrigerating machine control system comprises: a first interface (301A) corresponding to a first external power source (101) for supplying a voltage lower than a predetermined reference voltage value; a second interface (301B) corresponding to a second external power source (102) for supplying a voltage higher than the predetermined reference voltage value; and a controller 50 for controlling which interface to drive, the first interface or the second interface, depending on which external power source is connected to the electric transport refrigerating machine, the first external power source or the second external power source.

## Description

### Technical Field

The present disclosure relates to a control system of an electric transport refrigerator, an electric transport refrigerator equipped with the same, a control method for a control system of an electric transport refrigerator, and a control program for a control system of an electric transport refrigerator.

### Background Art

In the related art, in transport refrigerated vehicles used to transport medicines or food, a system in which an alternator (generator) and a battery dedicated to an electric transport refrigerator are mounted on diesel trucks has been mainstream. In particular, in Europe, in order to improve the penetration rate of electric trucks, it was necessary to provide a new external power supply dedicated to electric transport refrigerators.

PTL 1 discloses a land transport refrigeration apparatus equipped with two commercial power supplies including a second commercial power supply that outputs 200 V AC power and a first commercial power supply that outputs 100 V AC power. Furthermore, a controller receives a signal from a phase number detection device that outputs information on the number of power phases of the second commercial power supply as a signal, and receives a signal from an AC relay that outputs information on the presence or absence of input from the first commercial power supply as a signal. Then, the controller changes the signal to be output to the power conversion device based on each of the received signals, thereby controlling the output of the power conversion device.

PTL 2 discloses a transport refrigeration apparatus that can be operated using either a three-phase AC 200 V commercial power supply, a single-phase AC 100 V household power supply, or a battery as a power supply. When the household power supply is used as the operating power supply, the controller determines whether or not the temperature inside the compartment has reached the set temperature, prioritizes cooling operation using the refrigeration apparatus when the temperature inside the compartment has not reached the set temperature, and charges the battery when the temperature inside the compartment has reached the set temperature.

### Citation List

### Patent Literature

[PTL 1] Japanese Patent No. 4592236
[PTL 2] Japanese Unexamined Patent Application Publication No. 2011-214796

### Summary of Invention

### Technical Problem

The external power supplies used in PTL 1 and PTL 2 are only two types: an AC 100 V external power supply and an AC 200 V external power supply. In recent years, particularly in Europe, efforts are being made to improve the fuel efficiency and energy saving of transport refrigerated vehicles, thereby making it difficult to mount new alternators (generators) and batteries (storage batteries) dedicated to electric transport refrigerators in either diesel trucks or electric vehicle (EV) trucks. Therefore, there is an increasing number of electric transport refrigerators being operated with power supplied from external power supplies that are not dedicated to electric transport refrigerators. Accordingly, there is a growing demand for highly versatile electric transport refrigerators that can be used with a variety of power supply mounting forms.

The present disclosure has been made in consideration of the above circumstances, and an object of the present disclosure is to provide a control system of an electric transport refrigerator that expands a range of selectable external power supplies for driving an electric transport refrigerator mounted on a transport refrigerated vehicle, thereby improving the versatility of the electric transport refrigerator.

### Solution to Problem

A control system of an electric transport refrigerator according to one aspect in some embodiments of the present disclosure is applied to an electric transport refrigerator that includes an inverter, a converter, and an electric compressor, the control system including: a first interface corresponding to a first external power supply that supplies a voltage lower than a predetermined reference voltage value; a second interface corresponding to a second external power supply that supplies a voltage higher than a predetermined reference voltage value; and a controller that controls which of the first interface or the second interface to drive depending on whether the first external power supply or the second external power supply is connected to the electric transport refrigerator.

An electric transport refrigerator according to one aspect in some embodiments of the present disclosure includes: an inverter; a converter; an electric compressor; and the control system of an electric transport refrigerator.

A control method for a control system of an electric transport refrigerator according to one aspect in some embodiments of the present disclosure is a control method for an electric transport refrigerator that supplies power from an external power supply, the control method including: a step of driving either a first interface corresponding to a first external power supply that supplies a voltage lower than a predetermined reference voltage value, or a second interface corresponding to a second external power supply that supplies a voltage higher than a predetermined reference voltage value; and a step of controlling which of the first interface or the second interface to drive depending on whether the first external power supply or the second external power supply is connected to the electric transport refrigerator.

A control program for a control system of an electric transport refrigerator according to one aspect in some embodiments of the present disclosure is a control program for an electric transport refrigerator that supplies power from an external power supply, the control program for causing a computer to execute: a process of driving either a first interface corresponding to a first external power supply that supplies a voltage lower than a predetermined reference voltage value, or a second interface corresponding to a second external power supply that supplies a voltage higher than a predetermined reference voltage value; and a process of controlling which of the first interface or the second interface to drive depending on whether the first external power supply or the second external power supply is connected to the electric transport refrigerator.

### Advantageous Effects of Invention

According to the present disclosure, a range of selectable external power supplies for driving an electric transport refrigerator mounted on a transport refrigerated vehicle is expanded, thereby improving the versatility of the electric transport refrigerator.

### Brief Description of Drawings

Fig. 1 is a side view of a transport refrigerated vehicle equipped with an electric transport refrigerator according to an embodiment of the present disclosure.
Fig. 2 is a block diagram showing a configuration of the electric transport refrigerator according to the embodiment of the present disclosure.
Fig. 3 is a schematic configuration diagram showing an example of a hardware configuration of a control unit of the electric transport refrigerator of Fig. 1.
Fig. 4 is a functional block diagram showing an example of functions of the control unit in Fig. 3.
Fig. 5 is a schematic configuration diagram of a control system of an electric transport refrigerator according to an embodiment of the present disclosure.
Fig. 6 is a schematic diagram of a power supply path for the electric transport refrigerator in Fig. 5 when a low voltage external power supply is connected to the electric transport refrigerator.
Fig. 7 is a schematic diagram of a power supply path for the electric transport refrigerator in Fig. 5 when a low voltage external power supply is connected to the electric transport refrigerator and a battery is charged.
Fig. 8 is a schematic diagram of a power supply path for the electric transport refrigerator in Fig. 5 when a high voltage external power supply is connected to the electric transport refrigerator.
Fig. 9 is a schematic diagram of a power supply path for the electric transport refrigerator in Fig. 5 when a commercial power supply is connected to the electric transport refrigerator.

### Description of Embodiments

### (Regarding Transport Refrigerated Vehicle and Electric Transport Refrigerators)

Embodiments according to the present disclosure will be described below with reference to the drawings.

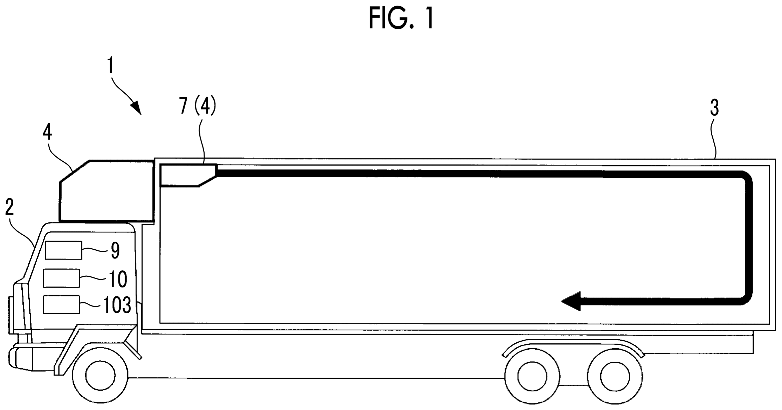

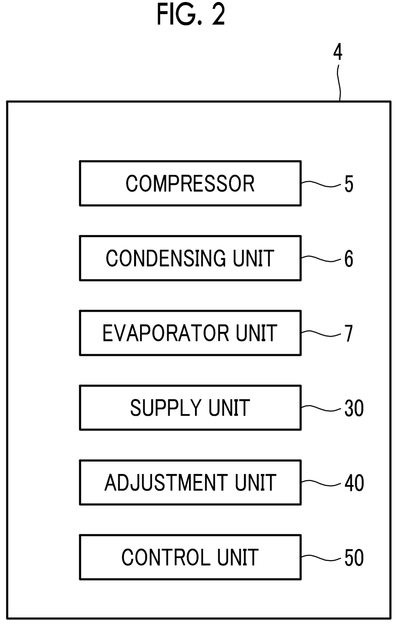

Fig. 1 is a schematic configuration of a transport refrigerated vehicle equipped with an electric transport refrigerator according to an embodiment of the present disclosure. Fig. 2 is a block diagram showing a configuration of the electric transport refrigerator according to the embodiment of the present disclosure. A transport refrigerated vehicle 1 includes a tractor (vehicle body) 2, a storage compartment 3 for storing items to be transported which is a transport subject, and an electric transport refrigerator 4 connected to the rear of the tractor 2 and for adjusting the temperature of the space within the storage compartment 3. The electric transport refrigerator 4 includes a compressor 5 that compresses a refrigerant, a condensing unit 6 that condenses the refrigerant, an evaporator unit 7 that evaporates the refrigerant, a supply unit 30 that supplies power to drive the electric transport refrigerator 4, an adjustment unit 40 that adjusts the power supplied from the supply unit 30, and a control unit 50 that controls each of these electrical components. The compressor 5, the condensing unit 6, and the evaporator unit 7 are connected to each other by a pipe (not shown) for transporting the refrigerant, thereby forming a refrigerating cycle.

The compressor 5 has a different drive type depending on the type of the electric transport refrigerator 4.

The tractor 2 includes an engine 9 and an alternator 10. The alternator 10 is connected to the engine 9 via a belt, and generates power using energy generated by the engine 9 when it is driven. The power generated by the alternator 10 is supplied to the electric transport refrigerator 4. The power generated by the alternator 10 may be supplied to a battery (power storage unit) 103 provided in the transport refrigerated vehicle 1 and used to charge the battery 103.

An inverter is an electric circuit that is electrically connected to the generator and generates currents and voltages with different frequencies based on the power generated by the generator. The configuration of the inverter is a known technique, and the known technique may be appropriately employed.

The storage compartment 3 is a sealable container that is loaded on the loading platform of the tractor 2 and is used to store items to be transported. The storage compartment 3 is provided with the evaporator unit 7. The air in the storage compartment 3 is cooled by heat exchange between an evaporator of the evaporator unit 7 and the air in the storage compartment 3.

The electric transport refrigerator 4 includes the compressor 5, the condensing unit 6, the evaporator unit 7, the supply unit 30, the adjustment unit 40, and the control unit 50. The electric transport refrigerator 4 drives each device using power supplied from an external power supply, which is a power supply independent of the electric transport refrigerator 4. As will be described below, the electric transport refrigerator 4 includes electrical components such as a converter, an inverter, a control board, and a power relay, and performs power conversion on the power supplied from an external power supply to drive each device.

The external power supply is, for example, a power supply attached to the transport refrigerated vehicle 1, an alternator (generator) provided in the transport refrigerated vehicle 1, a storage battery, or a commercial power supply which is a power facility at a point where the transport refrigerated vehicle 1 is stopped.

The condensing unit 6 has an outer shell formed by a box-shaped case fixed to a chassis of the transport refrigerated vehicle 1. The case houses a fan (not shown), a fan drive motor (not shown) that rotates the fan, a condenser (not shown) that condenses the high-temperature, high-pressure refrigerant sent from the compressor, a motor (not shown) that drives the compressor, and/or an engine (not shown). For example, the condenser is a heat exchanger having a heat transfer tube through which a refrigerant flows and fins attached to the heat transfer tube. The refrigerant condenses in the condenser, thereby dissipating heat to the outside air.

The evaporator unit 7 houses, within a case, a fan (not shown), a fan drive motor (not shown) that rotates the fan, an expansion valve that throttles the refrigerant, an evaporator that evaporates the refrigerant guided from the expansion valve, and the like. For example, the evaporator is a heat exchanger having a heat transfer tube through which a refrigerant flows and fins attached to the heat transfer tube. The refrigerant evaporates through heat exchange with the evaporator, thereby removing heat from the air inside the compartment and cooling the air inside the compartment.

The electric transport refrigerator 4 includes control unit 50 for controlling each electrical component provided in the electric transport refrigerator 4.

### (Regarding Control Unit)

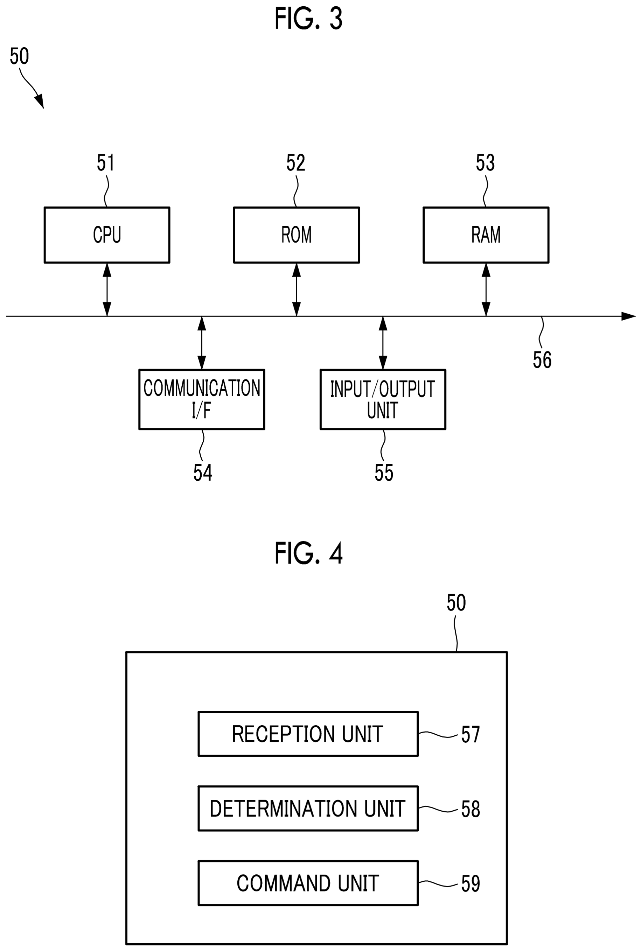

Fig. 3 is a schematic configuration diagram showing an example of a hardware configuration of the control unit of the electric transport refrigerator of Fig. 1. As shown in Fig. 3, the control unit 50 has a computer (computer system) and includes, for example, a CPU 51, an auxiliary storage device (ROM) 52 for storing programs executed by the CPU 51, data referenced by these programs, and the like, a main storage device (RAM) 53 that functions as a work area when each program is executed, a communication interface 54 for connecting to a network, an input/output unit 55 that receives inputs from external devices and outputs control commands to external devices that can communicate with the control unit 50, and the like. Each of these units is connected via, for example, a bus 56. As the auxiliary storage device 52, for example, a magnetic disk, a magneto-optical disk, a semiconductor memory, or the like can be given as an example.

As an example, a series of processes for implementing various functions which will be described later are stored in the auxiliary storage device 52 in the form of a program, the CPU 51 reads the program into the main storage device 53 to execute an information processing and operation process, and thus, various functions are implemented. As the program, a form installed in advance in the auxiliary storage device 52, a form which is provided in a state of being stored in another computer-readable storage medium, a form which is distributed via wired or wireless communication means, or the like may be applied. The computer-readable storage medium is a magnetic disk, a magneto-optical disk, a CD-ROM, a DVD-ROM, a semiconductor memory, or the like.

Fig. 4 is a functional block diagram showing an example of functions of the control unit in Fig. 3. As shown in Fig. 4, the control unit 50 includes a reception unit 57, a determination unit 58, and a command unit 59. The configurations of the control unit 50 shown in Figs. 3 and 4 are capable of electric communication with each other.

The control unit (controller) 50 controls which of a plurality of switching elements to drive depending on whether a low voltage external power supply (first external power supply) 101 or a high voltage external power supply (second external power supply) 102 is connected to the electric transport refrigerator 4. The switching element is a power relay, for example.

The reception unit 57 receives a user input, which is information for inputting the driving conditions of the electric transport refrigerator 4. Here, the user input is, for example, information input by a user, and includes information for specifying whether the external power supply supplying power to the electric transport refrigerator 4 is a high voltage output or a low voltage output. As the user input, for example, whether the output voltage of the external power supply is high voltage or low voltage may be input, the output voltage of the external power supply may be directly input, or model information of the external power supply may be input.

The user input may be any input as long as the output voltage of the external power supply that supplies power to the electric transport refrigerator 4 can be specified, and may be changed as appropriate.

When the electric transport refrigerator 4 is equipped with a detector (not shown) that detects the output voltage of the external power supply, the reception unit 57 may receive a detection signal from the detector instead of a user input. The detector and the detection signal are not limited to a voltage, and may be model information of the connected external power supply, and the like.

When there are a plurality of external power supplies that supply power to the electric transport refrigerator 4, information on the driving conditions of each external power supply may be received. For example, when the external power supply is the battery 103, the reception unit 57 may receive the current state of charge of the battery 103, the time elapsed since the start of use, the number of times it has been charged and discharged up to the current time, and the degree of deterioration.

The determination unit 58 determines an output voltage of the external power supply based on the user input or the detection signal received by the reception unit 57. Furthermore, the reception unit 57 determines a power supply path for appropriately driving the electric transport refrigerator 4 based on driving conditions such as the number of external power supplies supplying power to the electric transport refrigerator 4 and the output performance of each external power supply.

When the reception unit 57 receives a user input, the determination unit 58 determines a power supply path for appropriately driving the electric transport refrigerator 4 based on the user input. For example, when the external power supply supplying power to the electric transport refrigerator 4 is only an external power supply that outputs a low voltage, a determination is made as to whether to switch the power supply path of the electric transport refrigerator 4 such that only a relay element provided in the power supply path corresponding to the connected external power supply enters an ON state (conductive state) and relay elements of the other power supply paths enter an OFF state (cut-off state).

The determination unit 58 may determine an appropriate power supply path based on the driving conditions of the transport refrigerator and the driving conditions of the external power supply received by the reception unit 57.

When the reception unit 57 receives a detection signal from the detector, the determination unit 58 may determine the power supply path for appropriately driving the electric transport refrigerator 4 based on the detection signal from the detector.

For example, when the detection signal is model information of the external power supply, determination unit 58 refers to a table in which model information of external power supplies and power supply paths are associated with each other, and determines the power supply path corresponding to the external power supply. A determination is made as to whether to switch the power supply path of the electric transport refrigerator 4 such that only a relay element provided in the power supply path corresponding to the external power supply enters an ON state (conductive state) and relay elements of the other power supply paths enter an OFF state (cut-off state). The table in which model information of external power supplies and power supply paths are associated with each other may be stored in the auxiliary storage device 52 in advance.

For example, when the detection signal is the output voltage of an external power supply, the determination unit 58 may determine a power supply path that can appropriately supply power in accordance with the output voltage of the external power supply. When there are a plurality of external power supplies, and the plurality of external power supplies include a chargeable and dischargeable battery, the state of charge of the battery may be taken into consideration to determine a power supply path that can appropriately supply power.

The command unit 59 outputs a command to switch the power supply path of the electric transport refrigerator 4 based on a determination result of the determination unit 58. For example, the electric transport refrigerator 4 includes a plurality of power supply paths corresponding to each of the external power supplies, as will be described below. Further, each power supply path is provided with a power relay as a switching element for conducting or cutting off (on/off) the power supplied from the external power supply. In such a configuration, the command unit 59 outputs a control command to a configuration for controlling the drive state of each power relay based on the determination result of the determination unit 58, thereby controlling each power supply path to be conductive or cut off.

The command unit 59 outputs a control command to a converter and an inverter based on the determination result of the determination unit 58. Since known techniques can be applied to the techniques of converter control and inverter control, detailed description thereof will not be provided here.

The control unit 50 has the above-mentioned configuration and functions, and also controls the respective electrical parts provided in the electric transport refrigerator 4, such as the condensing unit and the evaporator unit. Since known techniques can be applied to the techniques of the control of the condensing unit, the evaporator unit, and the like provided in the electric transport refrigerator 4, detailed description thereof will not be provided here.

### (Configuration of Electric Transport Refrigerator)

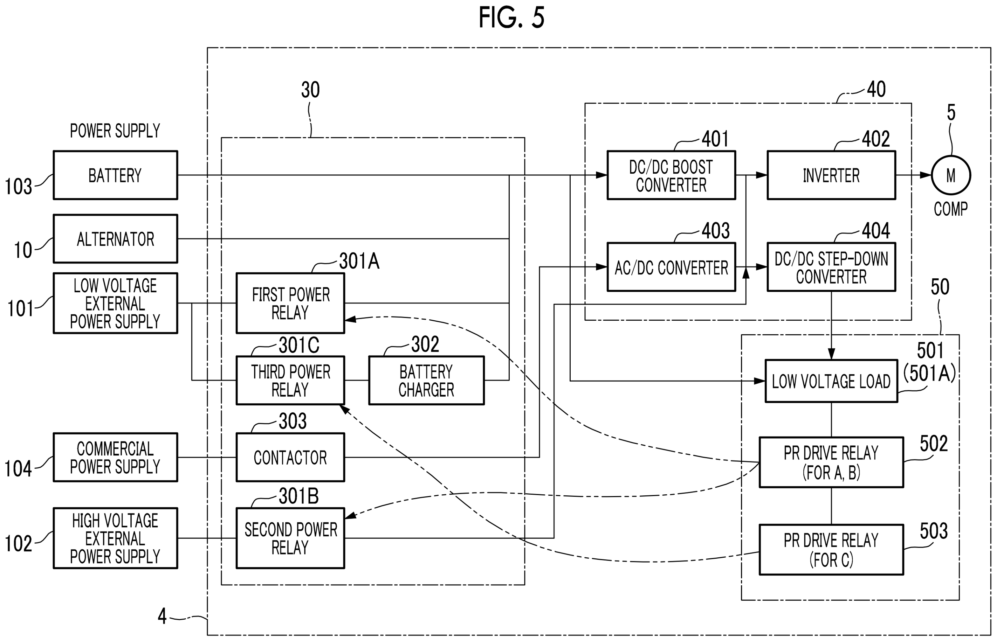

Fig. 5 is a schematic configuration diagram of a control system of an electric transport refrigerator according to an embodiment of the present disclosure. As shown in Fig. 5, a control system of an electric transport refrigerator according to the present embodiment includes a first power relay (first interface) 301A corresponding to the low voltage external power supply (first external power supply) 101, a second power relay (second interface) 301B corresponding to the high voltage external power supply (second external power supply) 102, and a control unit (controller) 50 that controls which of the first power relay 301A or the second power relay (second interface) 301B to drive depending on whether the low voltage external power supply 101 or the high voltage external power supply 102 is connected to the electric transport refrigerator.

The control system of an electric transport refrigerator is broadly divided into a supply unit 30 including a plurality of power relays that switch the conductive and cut-off states of each power supply path, an adjustment unit 40 that performs a conversion process on power (more specifically, a voltage) supplied from an external power supply, and a control unit 50 that drives the electric transport refrigerator 4 and controls each component of the electric transport refrigerator 4 corresponding thereto. In the electric transport refrigerator 4, the driving conditions of the supply unit 30, the adjustment unit 40, and the control unit 50 are controlled according to the type and the output voltage of the external power supply that is a source of power supply.

As shown in Fig. 5, external power supplies that supply power to the electric transport refrigerator 4 include, for example, an alternator 10, a low voltage external power supply 101, a high voltage external power supply 102, a battery 103, and a commercial power supply 104.

The alternator 10 is a power generation module mounted on the transport refrigerated vehicle 1. The alternator 10 is connected to the engine 9 via a belt, and is a power generation module that generates power by the engine 9 of the transport refrigerated vehicle 1 being driven.

The low voltage external power supply 101 is an external power supply that supplies a voltage lower than a predetermined reference voltage value.

The low voltage external power supply 101 is, for example, a solar panel, and outputs a voltage of 12 V to 60 V. The reference voltage value may be determined arbitrarily depending on an intended use of the user. The reference voltage value may be stored in the auxiliary storage device 52.

In the present embodiment, the low voltage external power supply 101 is exemplified by a solar panel, but is not limited to this example. The low voltage external power supply 101 may also be an alternator provided in a transport refrigerated vehicle 1 whose main use is not to supply power to the electric transport refrigerator 4.

The high voltage external power supply 102 is an external power supply that supplies a voltage higher than a predetermined reference voltage value.

The high voltage external power supply 102 is, for example, a lithium-ion battery, and outputs a voltage of 200 V to 800 V. The reference voltage value may be determined arbitrarily depending on an intended use of the user. The reference voltage value may be stored in the auxiliary storage device 52.

The predetermined reference voltage value is set based on the usage status of the user. For example, it is an intermediate value or a value in an intermediate range between the voltage value that the first external power supply can supply and the voltage value that the second external power supply can supply. For example, when the range of the voltage value that the first external power supply can supply is 12 V to 60 V and the range of the voltage value that the second external power supply can supply is 200 V to 800 V, the range of the reference voltage value is 61 V to 199 V.

The battery 103 is a chargeable and dischargeable battery mounted on the transport refrigerated vehicle 1. The battery 103 can be charged by power generated by the alternator 10 or by power supplied from another external power supply. The battery 103 can discharge power to drive the electric transport refrigerator 4 depending on the state of charge of the battery 103 or the output voltage of another external power supply.

The commercial power supply 104 is a general term for a facility that can be a source of power supply. The commercial power supply 104 is, for example, a power facility at a distribution center that is the base from which the transport refrigerated vehicle 1 makes distribution, or a power facility at a stop on the distribution route of the transport refrigerated vehicle 1.

The supply unit 30 includes a first power relay (first interface) 301A, a second power relay (second interface) 301B, a third power relay (third interface) 301C, a battery charger (auxiliary power storage unit) 302, and a contactor 303.

The first power relay 301A, the second power relay 301B, and the third power relay 301C are switching elements whose on/off states are switched by receiving an electrical signal from the outside. Here, the first power relay 301A, the second power relay 301B, and the third power relay 301C are selected to have appropriate physical properties based on the disposition on the electric circuit, the magnitude of the current of the electrical signal to be received, and the like.

For example, the power relay is a mechanical relay which is a contact relay, or a MOSFET relay which is a non-contact relay. Since known functions and configurations can be applied to the functions and configurations of the power relay, detailed description thereof will not be provided here.

The first power relay 301A corresponds to the low voltage external power supply 101 that supplies a voltage lower than a predetermined reference voltage value. When the low voltage external power supply 101 is mounted on the transport refrigerated vehicle 1, the first power relay 301A receives an electrical signal from the control unit 50 as will be described below and enters an ON state. When the first power relay 301A enters an ON state, power supplied from the low voltage external power supply 101 is supplied to the adjustment unit 40. The power supplied to the adjustment unit 40 is converted into a plurality of predetermined powers corresponding to each of the configurations provided in the electric transport refrigerator 4 to be supplied with power. The converted power is then supplied to each of the configurations provided in the electric transport refrigerator 4, thereby driving the electric transport refrigerator 4 under desired conditions.

When the low voltage external power supply 101 is not mounted on the transport refrigerated vehicle 1, the first power relay 301A does not receive an electrical signal from the control unit 50 and enters an OFF state.

The second power relay 301B corresponds to the high voltage external power supply 102 that supplies a voltage higher than a predetermined reference voltage value. When the high voltage external power supply 102 is mounted on the transport refrigerated vehicle 1, the second power relay 301B receives an electrical signal from the control unit 50 as will be described below and enters an ON state. When the second power relay 301B enters an ON state, power supplied from the high voltage external power supply 102 is supplied to the adjustment unit 40. The power supplied to the adjustment unit 40 is converted into a plurality of predetermined powers corresponding to each of the configurations provided in the electric transport refrigerator 4 to be supplied with power. The converted power is then supplied to each of the configurations provided in the electric transport refrigerator 4, thereby driving the electric transport refrigerator 4 under desired conditions.

When the high voltage external power supply 102 is not mounted on the transport refrigerated vehicle 1, the second power relay 301B does not receive an electrical signal from the control unit 50 and enters an OFF state.

The third power relay 301C corresponds to the low voltage external power supply 101. When the low voltage external power supply 101 is mounted on the transport refrigerated vehicle 1 and the state of charge (SOC) of the battery 103 is equal to or lower than a preset reference value, the third power relay 301C receives an electrical signal from the control unit 50 as will be described below and enters an ON state. The third power relay 301C is connected in series with the battery charger 302. When the third power relay 301C is in the ON state, the battery 103 is charged by the power supplied from the low voltage external power supply 101 until the state of charge of the battery 103 reaches or exceeds a preset reference value.

The preset reference value may be determined arbitrarily depending on the intended use of the user. The reference voltage value may be stored in the auxiliary storage device 52.

The battery charger 302 is a device that adjusts the current and the voltage for charging the battery 103. The battery charger 302 is disposed between the third power relay 301C and the battery 103, and suppresses an inrush current from being input to the battery 103 in a state where the dielectric constant of the battery 103 is low.

The battery charger 302 includes a first electric wire of a positive electrode and a second electric wire of a negative electrode, and the first electric wire and the second electric wire are preferably electric wires that are separated from other electric wires, more specifically, from other power supply lines. It is preferable that the configuration of the battery charger 302 is a configuration in which electrical interference between the individual electric wires is suppressed and electromagnetic compatibility (EMC) is improved.

The battery charger 302 is, for example, a converter or a battery charger board, and the functions and detailed configurations of these configurations are not described in detail here because known configurations can be applied.

The contactor 303 is a switching element that can pass a large amount of current, has a large electrical contact opening and closing capacity, and has excellent dielectric strength. The contactor 303 is connected to the commercial power supply 104, and the power supplied from the commercial power supply 104 is supplied to the adjustment unit 40 via the contactor 303.

Since known functions and configurations can be applied to the functions and detailed configurations of the contactor 303, detailed description thereof will not be provided here.

The adjustment unit 40 includes a DC/DC boost converter 401, an inverter 402, an AC/DC converter 403, and a DC/DC step-down converter 404. The adjustment unit 40 performs a conversion process on the power supplied from an external power supply, and supplies the converted power to each component of the electric transport refrigerator 4. The power supplied to the adjustment unit 40 is converted into a plurality of predetermined powers corresponding to each of the configurations provided in the electric transport refrigerator 4 to be supplied with power.

When any of the low voltage external power supply 101, the battery 103, or the alternator 10 is connected to the electric transport refrigerator 4, the DC/DC boost converter 401 boosts the voltage of the power supplied from the external power supply. For example, when the voltage of the power supplied from the low voltage external power supply 101, the battery 103, or the alternator 10 is 27 V (low voltage), the voltage is converted to 270 V (high voltage) by passing through the DC/DC boost converter 401. The voltage converted by the DC/DC boost converter 401 is supplied to the inverter 402.

The inverter 402 converts the power supplied from the DC/DC boost converter 401 into power for rotating and driving the compressor 5. Then, the inverter 402 changes the output power based on the electrical signal output from the control unit 50.

When the electric transport refrigerator 4 is connected to the commercial power supply 104, the AC/DC converter 403 converts AC power supplied from the commercial power supply 104 via the contactor 303 into DC power. Here, for example, the AC/DC converter 403 converts an AC voltage of 200 V supplied from the commercial power supply 104 into a DC voltage of 270 V. A part of the power converted by the AC/DC converter 403 is supplied to the compressor 5 via the inverter 402. Another part of the power converted by the AC/DC converter 403 is stepped down by the DC/DC step-down converter 404 and converted into a DC voltage of 27 V, and then supplied to the control unit 50.

When the high voltage external power supply 102 is connected to the electric transport refrigerator 4, the DC/DC step-down converter 404 steps down the voltage of the power supplied from the high voltage external power supply 102. For example, when the voltage of the power supplied from the high voltage external power supply 102 is 270 V, the voltage is converted to 27 V by passing through the DC/DC step-down converter 404. The power converted by the DC/DC step-down converter 404 is supplied to the control unit 50.

The control unit 50 includes a low voltage load 501, a PR drive relay 502 and a PR drive relay 503.

The control unit 50 controls whether to turn on or off the first power relay 301A, the second power relay 301B, or the third power relay 301C via the PR drive relay 502 or the PR drive relay 503, depending on the type of external power supply connected to the electric transport refrigerator 4.

The low voltage load 501 is an electrical component provided in the electric transport refrigerator 4, and is, for example, a control board, an inductor, a fan, or the like.

The low voltage load 501 is, for example, a control board 501A, and a field programmable gate array (FPGA) incorporating a control program that controls the driving conditions of the electric transport refrigerator 4 is mounted thereon. The control board 501A outputs control signals to each component provided in the electric transport refrigerator 4 in order to control the driving conditions of the electric transport refrigerator 4. The control board 501A may have each configuration and each function of the control unit 50.

The PR drive relay 502 is a relay element for switching the on/off states of the first power relay 301A and the second power relay 301B, and outputs a control signal for switching the on/off states of the first power relay 301A and the second power relay 301B to each of the first power relay 301A and the second power relay 301B based on a control command output from the command unit 59.

The drive states of the first power relay 301A and the second power relay 301B are determined by the determination unit 58 based on a user input or a detection result of a detector, which changes depending on the type of external power supply connected to the electric transport refrigerator 4.

The relay element used in the PR drive relay 502 is, for example, a small capacity relay, an FET, or the like.

The PR drive relay 503 is a relay element for switching the on/off state of the third power relay 301C, and outputs a control signal for switching the on/off state of the third power relay 301C to the third power relay 301C based on a control command output from the command unit 59.

The drive state of the third power relay 301C is determined by the determination unit 58 based on a user input or a detection result of a detector, which changes depending on the type of external power supply connected to the electric transport refrigerator 4.

The relay element used in the PR drive relay 503 is, for example, a small capacity relay, an FET, or the like.

### (When Using Low Voltage External Power Supply as External Power Supply)

An example of control for switching a power supply path for the electric transport refrigerator 4 depending on the type and the drive state of the external power supply connected to the electric transport refrigerator 4 will be described below.

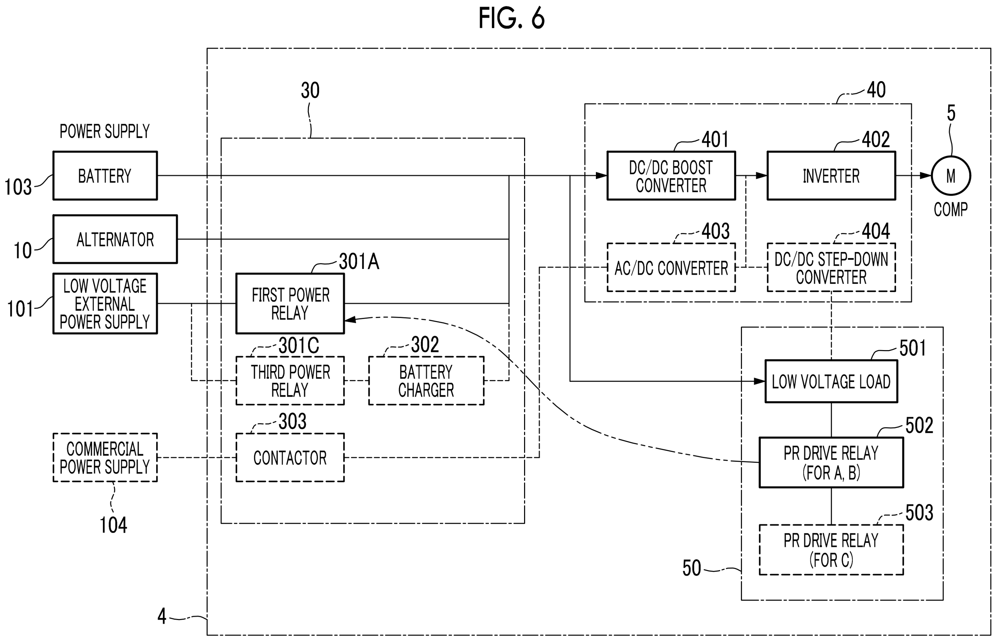

Fig. 6 is a schematic diagram of a power supply path for the electric transport refrigerator in Fig. 5 when a low voltage external power supply is connected to the electric transport refrigerator. In Fig. 6, a solid line indicates a connection state in which power is supplied, a dashed line indicates a non-connection state in which power is not supplied, and a dashed double-dotted line indicates a control signal line.

When the low voltage external power supply 101 is connected to the electric transport refrigerator 4, first, the user inputs to the control unit 50 that the external power supply connected to the electric transport refrigerator 4 is the low voltage external power supply 101.

First, the control unit 50 receives the user input via the reception unit 57. Then, based on the user input received, the determination unit 58 determines to turn on the first power relay 301A and to turn off the second power relay 301B and the third power relay 301C. Then, the command unit 59 outputs a control command to each of the PR drive relay 502 and the PR drive relay 503 to turn on only the first power relay 301A. Then, the first power relay 301A is turned on by the control signal output by the PR drive relay 502.

Instead of receiving a user input, the reception unit 57 may receive the detection result of the detector and perform subsequent processes.

When only the first power relay 301A is turned on, power supplied from each of the battery 103, the alternator 10, and the low voltage external power supply 101 is supplied to the DC/DC boost converter 401 of the adjustment unit 40 and the low voltage load 501 of the control unit 50.

A part of the power output from each of the battery 103, the alternator 10, and the low voltage external power supply 101 is supplied to the DC/DC boost converter 401. The power supplied to the DC/DC boost converter 401 is boosted to a predetermined voltage by the DC/DC boost converter 401, and then converted from DC power to AC power by the inverter 402 and supplied to the compressor 5.

A part of the power output from each of the battery 103, the alternator 10, and the low voltage external power supply 101 is supplied to the low voltage load 501 of the control unit 50. In this way, by supplying power to the low voltage load 501 of the control unit 50, the low voltage load 501 can output control commands or control signals to each of the configurations provided in the electric transport refrigerator 4.

When the low voltage external power supply 101 is mounted on the transport refrigerated vehicle 1, more specifically, at a point before the determination unit 58 determines which of the first power relay 301A to the third power relay 301C to turn on, the low voltage load 501 of the control unit 50 may be driven using power supplied from the battery 103 or the alternator 10.

With regard to each of the external power supplies that supply power to the electric transport refrigerator 4, the battery 103 and the alternator 10 may be used as main power supplies, and the low voltage external power supply 101 may be used as an auxiliary power supply.

### (When Using High Voltage External Power Supply as External Power Supply to Charge Battery)

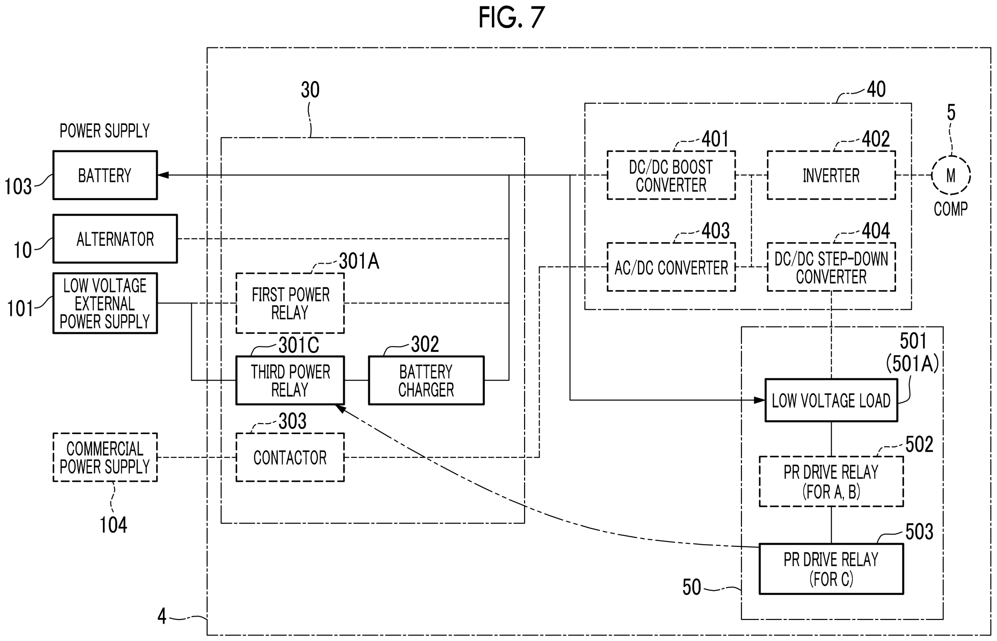

Fig. 7 is a schematic diagram of a power supply path for the electric transport refrigerator in Fig. 5 when a low voltage external power supply is connected to the electric transport refrigerator and a battery is charged. In Fig. 7, a solid line indicates a connection state in which power is supplied, a dashed line indicates a non-connection state in which power is not supplied, and a dashed double-dotted line indicates a control signal line.

When the state of charge of the battery 103 is lower than a preset reference value, the electric transport refrigerator 4 is controlled such that the driving of the compressor 5 is stopped and the battery 103 is charged by power supplied from the low voltage external power supply 101.

In this case, the control unit 50 receives a user input or detection results via the reception unit 57, and determines via the determination unit 58 to turn on the third power relay 301C and turn off the first power relay 301A and the second power relay 301B in order to charge the battery. Then, the command unit 59 outputs a control command to each of the PR drive relay 502 and the PR drive relay 503 to turn on only the first power relay 301A. Then, the third power relay 301C is turned on by the control signal output by the PR drive relay 503.

When the first power relay 301A is turned off and the third power relay 301C is turned on, the power supplied from the low voltage external power supply 101 is supplied to the battery 103 via the third power relay 301C and the battery charger 302.

In this way, the control unit 50 switches the power supply path between the low voltage external power supply 101 and the battery 103 depending on the state of charge of the battery 103. More specifically, when the state of charge of the battery 103 is lower than a preset reference value, the power supply path is switched to one in which the battery charger 302 is provided between the low voltage external power supply 101 and the battery 103.

Then, when the state of charge of the battery 103 is lower than a preset reference value, a power supply path in which the battery charger 302 is provided between the low voltage external power supply 101 and the battery 103 is selected, thereby preventing an inrush current from being input from the low voltage external power supply 101 to the battery 103.

When the battery 103 is charged until the state of charge of the battery 103 reaches or exceeds a preset reference value, the control unit 50 may switch the supply path of power supplied from the low voltage external power supply 101 by switching the on/off state of each of the power relays 301A to 301C, as shown in Fig. 6, to drive the compressor 5.

### (When Using High Voltage External Power Supply as External Power Supply)

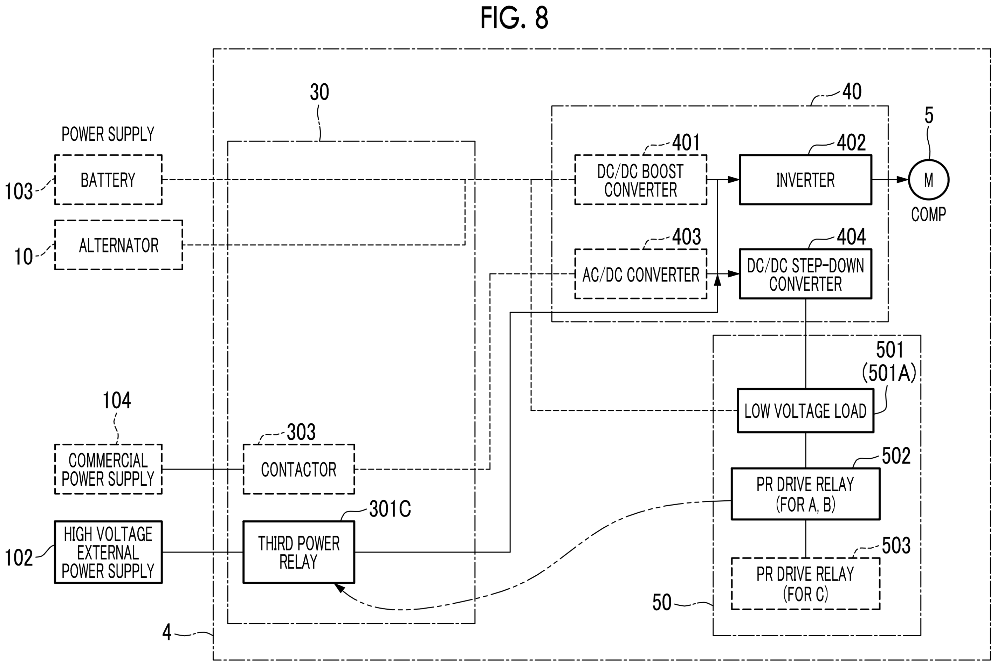

Fig. 8 is a schematic diagram of a power supply path for the electric transport refrigerator in Fig. 5 when a high voltage external power supply is connected to the electric transport refrigerator. In Fig. 8, a solid line indicates a connection state in which power is supplied, a dashed line indicates a non-connection state in which power is not supplied, and a dashed double-dotted line indicates a control signal line.

When the high voltage external power supply 102 is connected to the electric transport refrigerator 4, first, the user inputs to the control unit 50 that the external power supply connected to the electric transport refrigerator 4 is the high voltage external power supply 102.

First, the control unit 50 receives the user input via the reception unit 57. Then, based on the user input received, the determination unit 58 determines to turn on the second power relay 301B and to turn off the first power relay 301A and the third power relay 301C. Then, the command unit 59 outputs a control command to each of the PR drive relay 502 and the PR drive relay 503 to turn on only the second power relay 301B. Then, the second power relay 301B is turned on by the control signal output by the PR drive relay 503.

Instead of receiving a user input, the reception unit 57 may receive the detection result of the detector and perform subsequent processes.

When only the second power relay 301B is turned on, the power supplied from the high voltage external power supply 102 is supplied to the inverter 402 and the DC/DC step-down converter 404 of the adjustment unit 40. The high AC voltage output from the inverter 402 is then supplied to the compressor 5.

A part of the power output from the high voltage external power supply 102 is supplied to the inverter 402. The power supplied to the inverter 402 is then converted from DC power to AC power by the inverter 402 and is supplied to the compressor 5.

A part of the power output from the high voltage external power supply 102 is supplied to the DC/DC step-down converter 404. Then, the power supplied to the DC/DC step-down converter 404 is stepped down to a predetermined voltage by the DC/DC step-down converter 404 and then supplied to the low voltage load 501 of the control unit 50. In this way, by supplying power to the low voltage load 501 of the control unit 50, the low voltage load 501 of the control unit 50 can output control commands or control signals to each of the configurations provided in the electric transport refrigerator 4.

Although Fig. 8 shows an example in which the battery 103 and the alternator 10 are not connected, the battery 103 and the alternator 10 may be connected to the electric transport refrigerator 4 in parallel with the high voltage external power supply 102. When the high voltage external power supply 102 is mounted on the transport refrigerated vehicle 1, in addition to the high voltage external power supply 102, the battery 103 and the alternator 10 may function as external power supplies. When the high voltage external power supply 102 is mounted on the transport refrigerated vehicle 1, more specifically, at a point before the determination unit 58 determines which of the first power relay 301A to the third power relay 301C to turn on, the low voltage load 501 of the control unit 50 may be driven using power supplied from the battery 103 or the alternator 10.

With regard to each of the external power supplies that supply power to the electric transport refrigerator 4, the battery 103 and the alternator 10 may be used as auxiliary power supplies, and the high voltage external power supply 102 may be used as a main power supply.

In Fig. 8, the external power supply supplying power to the electric transport refrigerator 4 is the high voltage external power supply 102 only, however, the present disclosure is not limited to the example, and power may be supplied to the electric transport refrigerator 4 from the alternator 10 and the battery 103 in parallel with the high voltage external power supply 102. In this case, the DC/DC boost converter 401 may be driven by the control unit 50.

### (When Using Commercial Power Supply as External Power Supply)

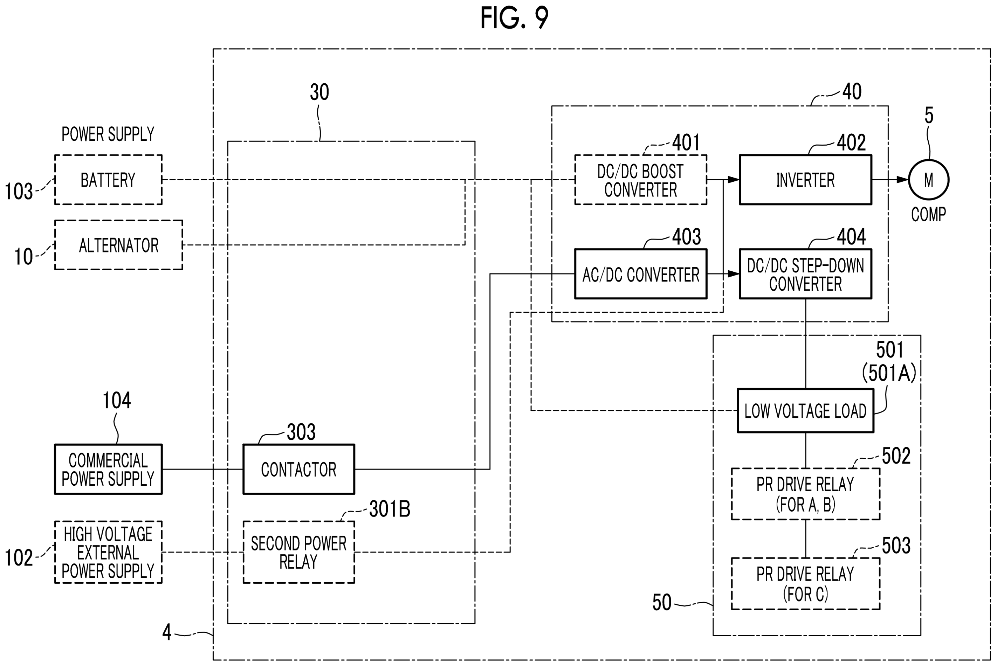

Fig. 9 is a schematic diagram of a power supply path for the electric transport refrigerator in Fig. 5 when a commercial power supply is connected to the electric transport refrigerator. In Fig. 9, a solid line indicates a connection state in which power is supplied, and a dashed line indicates a non-connection state in which power is not supplied.

For example, when the electric transport refrigerator 4 uses the commercial power supply 104 installed in a distribution center as an external power supply, first, the user inputs to the control unit 50 that the external power supply connected to the electric transport refrigerator 4 is the commercial power supply 104. In this case, the control unit 50 does not perform control to switch the on/off state of each of the first power relay 301A to the third power relay 301C.

In this case, the power supplied from the commercial power supply 104 is supplied to the AC/DC converter 403 via the contactor 303. Then, the power supplied to the AC/DC converter 403 is converted from AC power to DC power by the AC/DC converter 403 and boosted or stepped down to a predetermined voltage, and then supplied to the inverter 402 and the DC/DC step-down converter 404.

A part of the power output from the AC/DC converter 403 is supplied to the inverter 402. The power supplied to the inverter 402 is then converted from DC power to AC power by the inverter 402 and is supplied to the compressor 5.

A part of the power supplied from the AC/DC converter 403 is supplied to the DC/DC step-down converter 404. Then, the power supplied to the DC/DC step-down converter 404 is stepped down to a predetermined voltage by the DC/DC step-down converter 404 and then supplied to the low voltage load 501 of the control unit 50. In this way, by supplying power to the low voltage load 501 of the control unit 50, the low voltage load 501 of the control unit 50 can output control commands or control signals to each of the configurations provided in the electric transport refrigerator 4.

As described above, the power supplied from the AC/DC converter 403 is supplied to the inverter 402 and the DC/DC step-down converter 404, similarly to the power supplied from the high voltage external power supply 102 when the high voltage external power supply 102 is connected to the electric transport refrigerator 4, and power is supplied to the compressor 5 and the control unit 50. Therefore, the inverter 402 and the DC/DC step-down converter 404 can be commonly used regardless of whether the external power supply connected to the electric transport refrigerator 4 is the high voltage external power supply 102 or the commercial power supply 104.

According to the present embodiment, the following effects are achieved.

In the control system of an electric transport refrigerator according to the present embodiment, the control unit 50 controls which of the power relays 301A to 301C provided in the power supply path that supplies power to the electric transport refrigerator 4 to drive depending on the external power supply connected to the electric transport refrigerator 4. Accordingly, regardless of whether the power supplied from the external power supply connected to the electric transport refrigerator 4 is high voltage or low voltage, power can be supplied to the electric transport refrigerator 4 by switching the drive state of each of the power relays 301A to 301C in accordance with each voltage. In this manner, it is possible to drive the electric transport refrigerator 4 without having to install a new power supply dedicated to the electric transport refrigerator 4 in the transport refrigerated vehicle 1. Therefore, it is possible to expand the range of external power supplies that the user can select. That is, the selectable range of the transport refrigerated vehicle 1 on which the electric transport refrigerator 4 is mounted can be expanded, thereby improving the versatility of the electric transport refrigerator 4. By facilitating the electrification of the electric transport refrigerator 4, it is possible to improve the environmental resistance of the transport refrigerated vehicle 1.

The predetermined reference voltage value is set based on the usage status of the user. For example, it is an intermediate value or a value in an intermediate range between the voltage value that the low voltage external power supply 101 can supply and the voltage value that the high voltage external power supply 102 can supply. For example, when the range of the voltage value that the low voltage external power supply 101 can supply is 12 V to 60 V and the range of the voltage value that the high voltage external power supply 102 can supply is 200 V to 800 V, the range of the reference voltage value is 61 V to 199 V.

In the control system of an electric transport refrigerator according to the present embodiment, when the low voltage external power supply 101 is driven in parallel with the alternator 10 that supplies power to the electric transport refrigerator 4, the low voltage external power supply 101 may be applied as an auxiliary power supply corresponding to the load of the electric transport refrigerator. In this case, the alternator 10 serves as a main power supply for driving the electric transport refrigerator, and the first external power supply serves as an auxiliary power supply for driving the electric transport refrigerator. Accordingly, it is possible to stabilize the power supply to the electric transport refrigerator 4 and the driving capacity of the electric transport refrigerator 4.

In the control system of an electric transport refrigerator according to the present embodiment, when the low voltage external power supply 101 is driven in parallel with the alternator 10 that supplies power to the electric transport refrigerator, the low voltage external power supply 101 is applied as a power supply for charging the battery 103. In this case, the alternator 10 serves as a main power supply for driving the electric transport refrigerator 4, and the low voltage external power supply 101 serves as a power supply for charging the battery. Accordingly, it is possible to charge the battery 103 while maintaining the power supply to the electric transport refrigerator 4 and the driving capacity of the electric transport refrigerator 4, thereby improving power efficiency when driving the electric transport refrigerator 4.

In the control system of an electric transport refrigerator according to the present embodiment, when the high voltage external power supply 102 is driven in parallel with the alternator 10 that supplies power to the electric transport refrigerator 4, the high voltage external power supply 102 is applied as a main power supply corresponding to the load of the electric transport refrigerator 4. In this case, the alternator 10 serves as an auxiliary power supply for driving the electric transport refrigerator 4, and the high voltage external power supply 102 serves as a main power supply for driving the electric transport refrigerator 4. Accordingly, it is possible to stabilize the power supply to the electric transport refrigerator 4 and the driving capacity of the electric transport refrigerator 4.

In the control system of an electric transport refrigerator according to the present embodiment, the commercial power supply 104 is applied as a power supply that supplies power to the electric transport refrigerator 4 in response to the power supplied from the high voltage external power supply 102 to the electric transport refrigerator 4. Accordingly, when it is not preferable to drive the electric transport refrigerator 4 with power from the high voltage external power supply 102 at a stop point of the transport refrigerated vehicle 1, for example, at a distribution center, the electric transport refrigerator 4 can be driven stably by supplying power from the commercial power supply 104 to the electric transport refrigerator 4. Here, the commercial power supply 104 is a power supply that can be externally connected to an electric transport refrigerator installed at a stop point of the transport refrigerated vehicle 1, for example, at a distribution center.

In the control system of an electric transport refrigerator according to the present embodiment, when the low voltage external power supply 101 is connected to the electric transport refrigerator 4 and the state of charge of the battery 103 is lower than a preset reference value, control is performed to drive the third power relay 301C instead of the first power relay 301A. The battery charger 302 limits a current flowing to the battery 103 when the state of charge of the battery 103 is low. When the state of charge of the battery 103 is low, there is a risk that a large current, for example, an inrush current, will suddenly flow into the battery 103 if charging is performed using power supplied from an external power supply. Therefore, when the state of charge of the battery 103 is low, the battery 103 is charged with power supplied from the battery charger 302 to increase the state of charge. This makes it possible to prevent damage to the battery 103 and to continuously charge the battery 103.

In the control system of an electric transport refrigerator according to the present embodiment, the first electric wire of the positive electrode and the second electric wire of the negative electrode included in the battery charger 302 are electric wires separated from the other electric wires. Here, the other electric wires specifically refer to power supply lines. This suppresses electrical interference between the first electric wire, the second electric wire, and other electric wires through which high power flows. It is possible to improve electromagnetic compatibility (EMC) of the control system of the electric transport refrigerator and the circuits included in this control system.

Although the present disclosure has been described using the embodiments, the technical scope of the present disclosure is not limited to the scope described in the above embodiments. Various modifications or improvements can be made to the above-described embodiments without departing from the gist of the present disclosure, and such modifications or improvements are also included in the technical scope of the present disclosure. The above embodiments may be combined as appropriate.

The number and the connection state of external power supplies connected to the electric transport refrigerator 4 are not limited to those in the above-described embodiment. For example, a plurality of external power supplies may be connected in parallel to the electric transport refrigerator 4, and power may be supplied to the electric transport refrigerator 4 via power supply paths corresponding to each of the external power supplies.

### (Supplementary Notes)

The control system of an electric transport refrigerator, the transport refrigerator equipped with the same, the control method for a control system of an electric transport refrigerator, and the control program for a control system of an electric transport refrigerator which are described in the above-mentioned embodiments can be understood, for example, as follows.

A control system of an electric transport refrigerator according to a first aspect of the present disclosure is applied to an electric transport refrigerator that includes an inverter, a converter, and an electric compressor, and the control system includes: a first interface (301A) corresponding to a first external power supply (101) that supplies a voltage lower than a predetermined reference voltage value; a second interface (301B) corresponding to a second external power supply (102) that supplies a voltage higher than a predetermined reference voltage value; and a controller (50) that controls which of the first interface or the second interface to drive depending on whether the first external power supply or the second external power supply is connected to the electric transport refrigerator.

With the control system of an electric transport refrigerator according to the present disclosure, the controller controls which of the first interface or the second interface to drive depending on whether a first external power supply supplying a voltage lower than a reference voltage value or a second external power supply supplying a voltage higher than a reference voltage value is connected to the electric transport refrigerator. Accordingly, regardless of whether the power supplied from an external power supply connected to the electric transport refrigerator is high voltage or low voltage, by driving the interface corresponding to each voltage, the electric transport refrigerator can be driven without having to install a new power supply dedicated to the electric transport refrigerator. Therefore, it is possible to expand the range of external power supplies that the user can select. That is, the selectable range of the transport refrigerated vehicle on which the electric transport refrigerator is mounted can be expanded, thereby improving the versatility of the electric transport refrigerator. By facilitating the electrification of the electric transport refrigerator, it is possible to improve the environmental resistance of the transport refrigerated vehicle.

The predetermined reference voltage value is set based on the usage status of the user. For example, it is an intermediate value or a value in an intermediate range between the voltage value that the first external power supply can supply and the voltage value that the second external power supply can supply. For example, when the range of the voltage value that the first external power supply can supply is 12 V to 60 V and the range of the voltage value that the second external power supply can supply is 200 V to 800 V, the range of the reference voltage value is 61 V to 199 V.

In the control system of an electric transport refrigerator according to a second aspect of the present disclosure, in the first aspect, when the first external power supply and a generator (10) that supplies power to the electric transport refrigerator are connected to the electric transport refrigerator, the first external power supply is drivable in parallel with the generator and is applied as an auxiliary power supply corresponding to a load of the electric transport refrigerator.

With the control system of an electric transport refrigerator according to the present disclosure, when the first external power supply is driven in parallel with the generator that supplies power to the electric transport refrigerator, the first external power supply is applied as an auxiliary power supply corresponding to the load of the electric transport refrigerator. In this case, the generator serves as a main power supply for driving the electric transport refrigerator, and the first external power supply serves as an auxiliary power supply for driving the electric transport refrigerator. Accordingly, it is possible to stabilize the power supply to the electric transport refrigerator and the driving capacity of the electric transport refrigerator.

In the control system of an electric transport refrigerator according to a third aspect of the present disclosure, in the first aspect, when the first external power supply, a generator (10) that supplies power to the electric transport refrigerator, and a power storage unit (103) that is chargeable and dischargeable and that supplies power to the electric transport refrigerator are connected to the electric transport refrigerator, the first external power supply is drivable in parallel with the generator and is applied as a power supply for charging the power storage unit.

With the control system of an electric transport refrigerator according to the present disclosure, when the first external power supply is driven in parallel with the generator that supplies power to the electric transport refrigerator, the first external power supply is applied as a power supply for charging the power storage unit. In this case, the generator serves as a main power supply for driving the electric transport refrigerator, and the first external power supply serves as a power supply for charging the battery. Accordingly, it is possible to charge the power storage unit while maintaining the power supply to the electric transport refrigerator and the driving capacity of the electric transport refrigerator, thereby improving power efficiency when driving the electric transport refrigerator.

In the control system of an electric transport refrigerator according to a fourth aspect of the present disclosure, in the first aspect, when the second external power supply, a generator (10) that supplies power to the electric transport refrigerator, and a power storage unit (103) that is chargeable and dischargeable and that supplies power to the electric transport refrigerator are connected to the electric transport refrigerator, the second external power supply is drivable in parallel with the generator and is applied as a main power supply corresponding to a load of the electric transport refrigerator.

With the control system of an electric transport refrigerator according to the present disclosure, when the second external power supply is driven in parallel with the generator that supplies power to the electric transport refrigerator, the second external power supply is applied as a main power supply corresponding to the load of the electric transport refrigerator. In this case, the generator serves as an auxiliary power supply for driving the electric transport refrigerator, and the second external power supply serves as a main power supply for driving the electric transport refrigerator. Accordingly, it is possible to stabilize the power supply to the electric transport refrigerator and the driving capacity of the electric transport refrigerator.

In the control system of an electric transport refrigerator according to a fifth aspect of the present disclosure, in any one of the first aspect or the fourth aspect, the control system further includes, when a commercial power supply (104) that is capable of supplying power in parallel with the second external power supply and supplies power to the electric transport refrigerator is connected to the electric transport refrigerator: an adjustment unit (40) that adjusts each of the powers supplied from the second external power supply or the commercial power supply, and the commercial power supply is applied as a power supply that supplies power to the electric transport refrigerator in response to the power supplied from the second external power supply to the electric transport refrigerator.

With the control system of an electric transport refrigerator according to the present disclosure, the commercial power supply is applied as a power supply that supplies power to the electric transport refrigerator in response to the power supplied from the second external power supply to the electric transport refrigerator. Accordingly, when it is not preferable to drive the transport refrigerator with power from the second external power supply at a stop point of the transport refrigerated vehicle, for example, at a distribution center, the electric transport refrigerator can be driven stably by supplying power from the commercial power supply to the electric transport refrigerator. Here, the commercial power supply is a power supply that can be externally connected to an electric transport refrigerator installed at a stop point of the transport refrigerated vehicle, for example, at a distribution center.

In the control system of an electric transport refrigerator according to a sixth aspect of the present disclosure, in the first aspect, the control system further includes, when the first external power supply and a power storage unit (103) that is chargeable and dischargeable and that supplies power to the electric transport refrigerator are connected to the electric transport refrigerator: a third interface (301C) corresponding to the first external power supply connected in parallel with the first interface; and an auxiliary power storage unit (302) that limits a current flowing to the power storage unit when a state of charge (SOC) of the power storage unit is lower than a preset reference value, and the controller controls to drive the third interface instead of the first interface when the state of charge of the power storage unit is lower than a preset reference value.

With the control system of an electric transport refrigerator according to the present disclosure, when the first external power supply is connected to the electric transport refrigerator and the state of charge of the power storage unit is lower than a preset reference value, control is performed to drive the third interface instead of the first interface. The auxiliary power storage unit limits a current flowing to the power storage unit when the state of charge of the power storage unit is low. When the state of charge of the power storage unit is low, there is a risk that a large current, for example, an inrush current, will suddenly flow into the power storage unit if charging is performed using power supplied from an external power supply. Therefore, when the state of charge of the power storage unit is low, the power storage unit is charged with power supplied from the auxiliary power storage unit to increase the state of charge. This makes it possible to prevent damage to the power storage unit and to continuously charge the power storage unit.

In the control system of an electric transport refrigerator according to a seventh aspect of the present disclosure, in the sixth aspect, the auxiliary power storage unit includes a first electric wire of a positive electrode and a second electric wire of a negative electrode, and the first electric wire and the second electric wire are separated from other electric wires included in the electric transport refrigerator.

With the control system of an electric transport refrigerator according to the present disclosure, the first electric wire of the positive electrode and the second electric wire of the negative electrode included in the auxiliary power storage unit are electric wires separated from the other electric wires. Here, the other electric wires specifically refer to power supply lines. This suppresses electrical interference between the first electric wire, the second electric wire, and other electric wires through which high power flows. It is possible to improve electromagnetic compatibility (EMC) of the control system of the electric transport refrigerator and the circuits included in this control system.

In the control system of an electric transport refrigerator according to an eighth aspect of the present disclosure, in any one of the first aspect, the second aspect, the third aspect, the sixth aspect, or the seventh aspect, a voltage value of power supplied from the first external power supply is 12 V to 60 V.

In the control system of an electric transport refrigerator according to a ninth aspect of the present disclosure, in any one of the first aspect, the fourth aspect, or the fifth aspect, a voltage value of power supplied from the second external power supply is 200 V to 800 V.

An electric transport refrigerator according to a tenth aspect of the present disclosure includes: an inverter; a converter; an electric compressor; and the control system of an electric transport refrigerator according to any one of the first aspect to the ninth aspect.

A control method for a control system of an electric transport refrigerator according to an eleventh aspect of the present disclosure is a control method for a control system of an electric transport refrigerator that supplies power from an external power supply, the control method including: a step of driving either a first interface corresponding to a first external power supply that supplies a voltage lower than a predetermined reference voltage value, or a second interface corresponding to a second external power supply that supplies a voltage higher than a predetermined reference voltage value; and a step of controlling which of the first interface or the second interface to drive depending on whether the first external power supply or the second external power supply is connected to the electric transport refrigerator.

A control program for a control system of an electric transport refrigerator according to a twelfth aspect of the present disclosure is a control program for a control system of an electric transport refrigerator that supplies power from an external power supply, the control program for causing a computer to execute: a process of driving either a first interface corresponding to a first external power supply that supplies a voltage lower than a predetermined reference voltage value, or a second interface corresponding to a second external power supply that supplies a voltage higher than a predetermined reference voltage value; and a process of controlling which of the first interface or the second interface to drive depending on whether the first external power supply or the second external power supply is connected to the electric transport refrigerator.

### Reference Signs List

1: transport refrigerated vehicle
2: tractor
3: storage compartment
4: electric transport refrigerator
5: compressor
6: condensing unit
7: evaporator unit
9: engine
10: alternator
30: supply unit
40: adjustment unit
50: control unit (controller)
51: CPU
52: auxiliary storage device
53: main storage device
54: communication interface
55: input/output unit
56: bus
57: reception unit
58: determination unit
59: command unit
101: low voltage external power supply (first external power supply)
102: high voltage external power supply (second external power supply)
103: battery (power storage unit)
104: commercial power supply
301A: first power relay (first interface)
301B: second power relay (second interface)
301C: third power relay (third interface)
302: battery charger (auxiliary power storage unit)
303: contactor
401: DC/DC boost converter
402: inverter
403: AC/DC converter
404: DC/DC step-down converter
501: low voltage load
501A: control board
502, 503: PR drive relay

## Claims

1. A control system of an electric transport refrigerator, the control system that is applied to an electric transport refrigerator that includes an inverter, a converter, and an electric compressor, the control system comprising:
a first interface corresponding to a first external power supply that supplies a voltage lower than a predetermined reference voltage value;
a second interface corresponding to a second external power supply that supplies a voltage higher than a predetermined reference voltage value; and
a controller that controls which of the first interface or the second interface to drive depending on whether the first external power supply or the second external power supply is connected to the electric transport refrigerator.

2. The control system of an electric transport refrigerator according to claim 1,
wherein, when the first external power supply and a generator that supplies power to the electric transport refrigerator are connected to the electric transport refrigerator,
the first external power supply is drivable in parallel with the generator and is applied as an auxiliary power supply corresponding to a load of the electric transport refrigerator.

3. The control system of an electric transport refrigerator according to claim 1,
wherein, when the first external power supply, a generator that supplies power to the electric transport refrigerator, and a power storage unit that is chargeable and dischargeable and that supplies power to the electric transport refrigerator are connected to the electric transport refrigerator,
the first external power supply is drivable in parallel with the generator and is applied as a power supply for charging the power storage unit.

4. The control system of an electric transport refrigerator according to claim 1,
wherein, when the second external power supply, a generator that supplies power to the electric transport refrigerator, and a power storage unit that is chargeable and dischargeable and that supplies power to the electric transport refrigerator are connected to the electric transport refrigerator,
the second external power supply is drivable in parallel with the generator and is applied as a main power supply corresponding to a load of the electric transport refrigerator.

5. The control system of an electric transport refrigerator according to claim 1, further comprising, when a commercial power supply that is capable of supplying power in parallel with the second external power supply and supplies power to the electric transport refrigerator is connected to the electric transport refrigerator:
an adjustment unit that adjusts each of the powers supplied from the second external power supply or the commercial power supply,
wherein the commercial power supply is applied as a power supply that supplies power to the electric transport refrigerator in response to the power supplied from the second external power supply to the electric transport refrigerator.

6. The control system of an electric transport refrigerator according to claim 1, further comprising, when the first external power supply and a power storage unit that is chargeable and dischargeable and that supplies power to the electric transport refrigerator are connected to the electric transport refrigerator:
a third interface corresponding to the first external power supply connected in parallel with the first interface; and
an auxiliary power storage unit that limits a current flowing to the power storage unit when a state of charge (SOC) of the power storage unit is lower than a preset reference value,
wherein the controller controls to drive the third interface instead of the first interface when the state of charge of the power storage unit is lower than a preset reference value.

7. The control system of an electric transport refrigerator according to claim 6,
wherein the auxiliary power storage unit includes a first electric wire of a positive electrode and a second electric wire of a negative electrode, and
the first electric wire and the second electric wire are separated from other electric wires included in the electric transport refrigerator.

8. The control system of an electric transport refrigerator according to claim 1,
wherein a voltage value of power supplied from the first external power supply is 12 V to 60 V.

9. The control system of an electric transport refrigerator according to claim 1,
wherein a voltage value of power supplied from the second external power supply is 200 V to 800 V.

10. An electric transport refrigerator comprising:
an inverter;
a converter;
an electric compressor; and
the control system of an electric transport refrigerator according to claim 1.

11. A control method for a control system of an electric transport refrigerator that supplies power from an external power supply, the control method comprising:
a step of driving either a first interface corresponding to a first external power supply that supplies a voltage lower than a predetermined reference voltage value, or a second interface corresponding to a second external power supply that supplies a voltage higher than a predetermined reference voltage value; and
a step of controlling which of the first interface or the second interface to drive depending on whether the first external power supply or the second external power supply is connected to the electric transport refrigerator.

12. A control program for a control system of an electric transport refrigerator that supplies power from an external power supply, the control program for causing a computer to execute:
a process of driving either a first interface corresponding to a first external power supply that supplies a voltage lower than a predetermined reference voltage value, or a second interface corresponding to a second external power supply that supplies a voltage higher than a predetermined reference voltage value; and
a process of controlling which of the first interface or the second interface to drive depending on whether the first external power supply or the second external power supply is connected to the electric transport refrigerator.
